# EUROPEAN PATENT APPLICATION

(11) **EP 4 001 997 A1**
(43) Date of publication of application: **25.05.2022**
(21) Application number: 20841116.5
(22) Date of filing: 21.05.2020
(51) Int. Cl.: G02B 30/10, G02B 30/26, G03B 35/24, H04N 13/302

(54) **DISPLAY DEVICE**

(30) Priority: 16.07.2019 JP 2019131147
(71) Applicant: Panasonic Intellectual Property Management Co., Ltd., Osaka-shi, Osaka 540-6207 (JP)
(72) Inventor: KASAHARA, Shigeo, Osaka-shi, Osaka 540-6207 (JP); TANAHASHI, Satoru, Osaka-shi, Osaka 540-6207 (JP); KAMADA, Naoki, Osaka-shi, Osaka 540-6207 (JP)
(74) Representative: Eisenführ Speiser
(86) International application number: PCT/JP2020/020068
(87) International publication number: WO 2021/010014

(57) **Abstract**

The display device includes a mirror display element, a display, an optical element array, an external light reflection suppression layer, and a driving unit. The mirror display element reflects a part of external light and transmits a part of the external light. A display is disposed on an opposite side of an outer surface of the mirror display element, in which a plurality of pixels are two-dimensionally arranged. An optical element array is disposed between the mirror display element and the display in parallel with a light emission surface of the display, in which a plurality of optical elements corresponding to a predetermined unit of pixels among the plurality of pixels are arranged. An external light reflection suppression layer is disposed between the mirror display element and the display to suppress reflection of the external light. The driving unit drives the display to turn on a predetermined pixel among the plurality of pixels.

## Description

### TECHNICAL FIELD

The present disclosure relates to a display device.

### BACKGROUND ART

PTL 1 discloses a half mirror plate, a 3D display device, and a half mirror display system including a control device that supplies a video signal to the 3D display device. The 3D display device is disposed on the rear side of the half mirror plate and displays a video for the left eye and a video for the right eye that form a disparity on a display surface of the 3D display device by the video signal. The disparity is set such that a composite video of the video for the left eye and the video for the right eye is perceived on the rear side of the display surface of the 3D display device. With such a configuration, the mirror image and the video can be recognized simultaneously while suppressing a sense of discomfort.

### Citation List

### Patent Literature

PTL 1: International Publication No. 2015/186735

### SUMMARY OF THE INVENTION

An object of the present disclosure is to provide a display device that superimposes a mirror image formed by a half mirror and an image formed by a light field display such that both images can be reproduced to be appropriately observed by an observer.

The display device according to the present disclosure includes: a mirror display element that reflects a part of external light and transmits a part of the external light; a display that is disposed on an opposite side of an outer surface of the mirror display element, in which a plurality of pixels are two-dimensionally arranged; an optical element array that is disposed between the mirror display element and the display in parallel with a light emission surface of the display, in which a plurality of optical elements corresponding to a predetermined unit of pixels among the plurality of pixels are arranged; an external light reflection suppression layer that is disposed between the mirror display element and the display to suppress reflection of the external light; and a driving unit that drives the display to turn on a predetermined pixel among the plurality of pixels.

According to the present disclosure, a mirror image formed by a half mirror and an image formed by a light field display are superimposed such that both images can reproduce to be appropriately observed by an observer.

### BRIEF DESCRIPTION OF DRAWINGS

FIG. 1 is a diagram schematically showing a configuration of a display unit of a display device according to a first configuration example of a first exemplary embodiment.
FIG. 2 is a block diagram showing a configuration of a driving unit of the display device according to the first configuration example of the first exemplary embodiment.
FIG. 3 is a diagram schematically showing a configuration of a display unit of a display device according to a second configuration example of the first exemplary embodiment.
FIG. 4 is a block diagram showing a configuration of a driving unit of the display device according to the second configuration example of the first exemplary embodiment.
FIG. 5 is a diagram showing an example of an emitted luminous flux in the display device of the first exemplary embodiment.
FIG. 6 is a diagram showing an example of reproduction of a stereoscopic image performed by the display device of the first exemplary embodiment.
FIG. 7 is a front view showing an image display example using the display device of the first exemplary embodiment.
FIG. 8 is a perspective view showing an image display example using the display device of the first exemplary embodiment.
FIG. 9 is a diagram schematically showing a positional relationship between a mirror image and a display image in a conventional example.
FIG. 10 is a diagram schematically showing a positional relationship between a mirror image and a display image in the display device of the first exemplary embodiment.
FIG. 11 is a diagram schematically showing a configuration of a display unit of a display device according to a first configuration example of a second exemplary embodiment.
FIG. 12 is a diagram showing a configuration and an operation of a diffused reflection suppression layer in the first configuration example of the second exemplary embodiment.
FIG. 13 is a block diagram showing a configuration of a driving unit of the display device according to the first configuration example of the second exemplary embodiment.
FIG. 14 is a diagram schematically showing a configuration of a display unit of a display device according to a second configuration example of the second exemplary embodiment.
FIG. 15 is a block diagram showing a configuration of a driving unit of the display device according to the second configuration example of the second exemplary embodiment.
FIG. 16 is a diagram schematically showing a configuration of a display unit of a display device according to a third configuration example of the second exemplary embodiment.
FIG. 17 is a diagram showing a configuration and an operation of a diffused reflection suppression layer in the third configuration example of the second exemplary embodiment.
FIG. 18 is a block diagram showing a configuration of a driving unit of the display device according to the third configuration example of the second exemplary embodiment.
FIG. 19 is a perspective view showing a relationship between each pixel of a display and a microlens in the display device of the second exemplary embodiment.
FIG. 20 is a diagram showing an example of an emitted luminous flux in the display device of the second exemplary embodiment.
FIG. 21 is a diagram showing an example of reproduction of a stereoscopic image performed by the display device of the second exemplary embodiment.
FIG. 22 is a diagram showing an image display example using the display device of the second exemplary embodiment.
FIG. 23 is a diagram showing an image display example using the display device of the second exemplary embodiment.

### DESCRIPTION OF EMBODIMENTS

Hereinafter, exemplary embodiments, in which the configurations according to the present disclosure are specifically disclosed, will be described in detail with reference to the drawings as appropriate. However, more detailed description than necessary may not be given. For example, detailed descriptions of already well-known matters and repeated descriptions for substantially the same configuration may not be given. This is to avoid unnecessary redundancy of the following description and to facilitate the understanding of those skilled in the art. It should be noted that the accompanying drawings and the following description are provided for those skilled in the art to fully understand the present disclosure, and are not intended to limit the subject matter described in the claims.

### (Background to Contents of Present Embodiment)

A mirror display device has been proposed in which a half mirror is provided on the front surface of the display of the display device such that the display image of the display and the mirror image formed by the half mirror can be observed. In the conventional mirror display device, the display image formed by the display is located behind the mirror image reflected by the half mirror as viewed from an observer. Therefore, in a case where a luminance of the display image is high, there is a problem in that the mirror image is hidden by the display image and cannot be viewed.

Further, a part of the external light reflected by the half mirror may be transmitted to the display side, reflected inside the display device, and returned to the half mirror to affect the display. In such a case, there is a problem in that noise such as bleeding occurs in the mirror image formed by the half mirror, which makes the image difficult for the observer to view.

Further, it is conceivable that the mirror display device may be configured to be provided with a touch panel to display an operation image as the display image and enable operation input from an observer. In such a case, there is a front-rear difference between the touch operation position of the touch panel and the position of the display image. Therefore, disparity occurs depending on the viewing direction of the observer, which causes a problem in that the operability is deteriorated.

Hereinafter, a description will be given of an example of a display device which has the following configuration. By combining a mirror display and a light field display, a mirror image formed by the half mirror and an image such as a stereoscopic image with a high sense of presence by the light field display are superimposed so that both images can be reproduced to be more clearly observed by an observer.

### (First Embodiment)

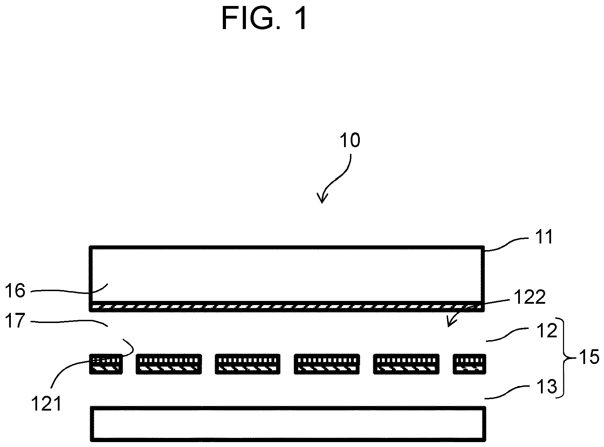

FIG. 1 is a diagram schematically showing a configuration of a display unit of a display device according to a first configuration example of a first exemplary embodiment. FIG. 1 schematically shows a cross section of display device 10 in a thickness direction (emitted light direction).

Display device 10 is configured to have half mirror 11, pinhole film 12, and display 13 in order from an outer surface side (a side from which light is emitted). Half mirror 11 as an example of the mirror display element has semi-transparent reflective film 16 on a surface (lower surface of FIG. 1) on display 13 side, reflects a part of external light, and transmits a part of the external light.

Display 13 is constituted of a self-emission display device such as an organic electroluminescence (EL) display, an inorganic EL display, a light emission diode (LED) display, a plasma display, or a cathode ray tube. In display 13, a plurality of pixels are two-dimensionally arranged vertically and horizontally on the display surface (light emission surface, upper surface of FIG. 1) on half mirror 11 side, and each pixel in the matrix shape is turned on and off to display an image.

In the present exemplary embodiment, pinhole film 12 is provided as an example of an optical element array. The optical element array is disposed between half mirror 11 and display 13 in parallel with the light emission surface of display 13. In the optical element array, a plurality of optical elements are two-dimensionally arranged at predetermined intervals corresponding to a predetermined unit of pixels of display 13.

Pinhole film 12 has pinhole array 122 in which pinholes 121 are disposed and formed as a plurality of optical elements in two dimensions in the vertical and horizontal directions at the predetermined intervals on the film surface. In the light emitted from display 13, pinhole film 12 transmits only the emitted light that passes through each pinhole 121 of pinhole array 122. Pinhole array 122 is provided with one pinhole 121 corresponding to a plurality of pixels for each predetermined unit of pixels of display 13. Light field display 15 is constituted of display 13 and pinhole film 12.

Between half mirror 11 and display 13, in the example shown in the drawing, black light absorption layer 17, which absorbs external light transmitted through half mirror 11 as an external light reflection suppression layer for suppressing reflection of the external light, is provided on the surface (upper surface of FIG. 1) of pinhole film 12 on half mirror 11 side. Black light absorption layer 17 has a function of absorbing external light incident on the surface of pinhole film 12 and suppressing reflection of the external light in pinhole film 12.

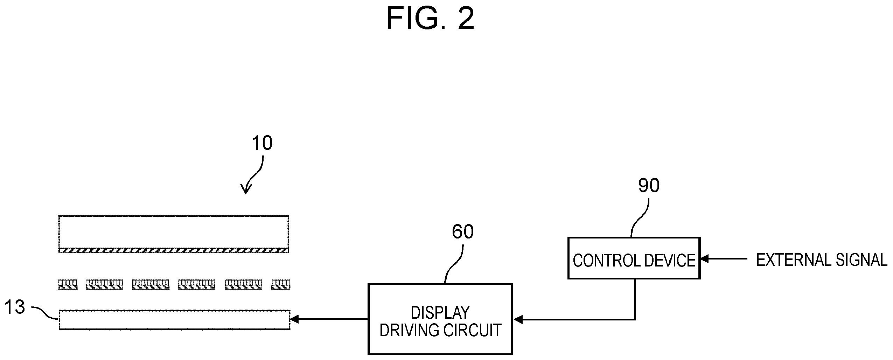

FIG. 2 is a block diagram showing a configuration of a driving unit of the display device according to the first configuration example of the first exemplary embodiment.

As an example of the driving unit, display driving circuit 60 is connected to display 13 of display device 10, and display driving circuit 60 is connected to control device 90. Control device 90 performs driving control of display driving circuit 60 on the basis of an external signal sent from the outside or a display control signal which is output by control device 90 itself. Display driving circuit 60 supplies a driving signal to display 13 on the basis of the display control signal sent from control device 90. Display 13 controls a display mode of the display such as display/non-display of an image, turning on/off of each pixel, and a turning-on mode in accordance with the driving signal sent from display driving circuit 60.

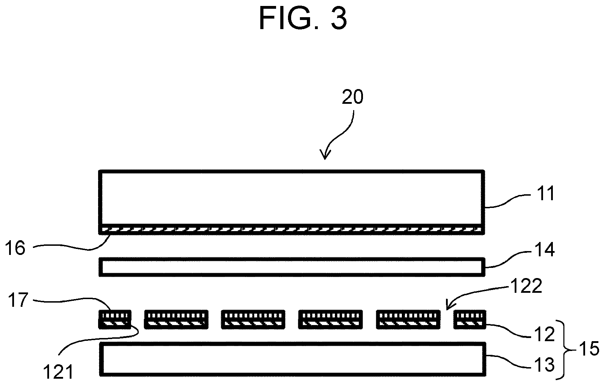

FIG. 3 is a diagram schematically showing a configuration of a display unit of a display device according to a second configuration example of the first exemplary embodiment. FIG. 3 schematically shows a cross section of display device 20 in a thickness direction (emitted light direction). The second configuration example is an example in which touch panel 14 is added to the first configuration example. Here, the components different from the first configuration example will be mainly described, and repeated description will not be given.

Display device 20 is configured to have half mirror 11, touch panel 14, pinhole film 12, and display 13 in order from an outer surface side (a side from which light is emitted). Touch panel 14 is constituted of, for example, a capacitance type touch panel device, a resistance film type touch panel device, or an optical touch panel device that detects an operation position by infrared rays. As touch panel 14, any touch panel device of contact type (touch operation type) or non-contact type (hover operation type) may be used. Touch panel 14 is provided between half mirror 11 and pinhole film 12. However, in a case where sensing is possible, touch panel 14 may be provided on the surface of half mirror 11 on the observer side, between reflective film 16 of half mirror 11 and the glass, between pinhole film 12 and black light absorption layer 17, between pinhole film 12 and display 13, with a structure integrated with display 13 (in-cell method), or on the opposite side of the observer of display 13. Touch panel 14 detects the operation position of the touch operation on the outer surface of half mirror 11 or the hover operation in a predetermined space closer to an observer side than the outer surface.

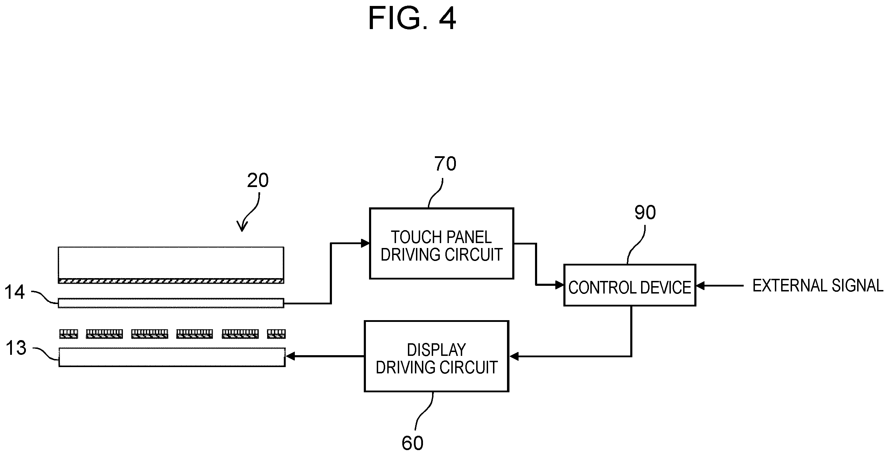

FIG. 4 is a block diagram showing a configuration of a driving unit of the display device according to a second configuration example of the first exemplary embodiment.

Display driving circuit 60 as an example of a driving unit is connected to display 13 of display device 20, touch panel driving circuit 70 is connected to touch panel 14, and touch panel driving circuit 70 and display driving circuit 60 are connected to control device 90. Control device 90 performs driving control of display driving circuit 60, on the basis of an operation signal sent from touch panel driving circuit 70, an external signal sent from the outside, or a display control signal which is output by control device 90 itself. Display driving circuit 60 supplies a driving signal to display 13 on the basis of the display control signal sent from control device 90. On the basis of the operation input of touch panel 14 by a user such as an observer, display 13 controls display modes of the display, such as display/non-display of an image, turning on/off of each pixel, and a turning-on mode in accordance with a driving signal sent from display driving circuit 60. In a case of erasing the image of display 13 and switching to only the mirror of half mirror 11, display 13 is turned off by display driving circuit 60.

Next, an operation of light field display 15 in display devices 10 and 20 of the first exemplary embodiment, that is, the display of an image such as a stereoscopic image formed by the light field display will be described.

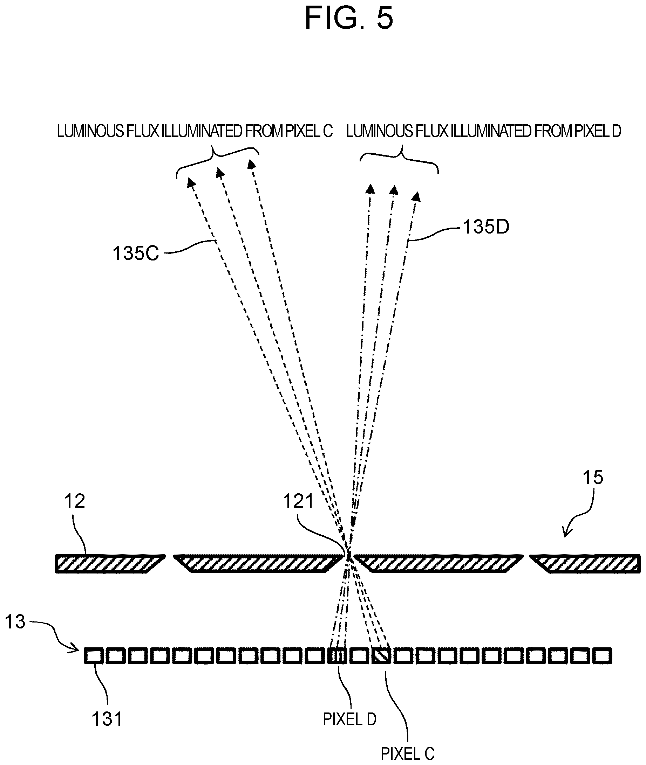

FIG. 5 is a diagram showing an example of an emitted luminous flux in the display device of the first exemplary embodiment. FIG. 5 describes a direction of the emitted luminous flux due to the turning on of the pixel at a predetermined position.

In display devices 10 and 20, a plurality of pixels 131 of display 13 and pinhole 121 of pinhole film 12 are disposed at a predetermined distance. In a case where optional pixel 131 is turned on, a luminous flux that diffuses slightly in accordance with a width of the pixel and a width of the pinhole is emitted to half mirror 11 side, becomes a luminous flux toward a predetermined direction, and is illuminated onto the space on the observer side.

At this time, in FIG. 5, luminous flux 135C illuminated from pixel C passes through the pinhole and is emitted in the diagonally upward direction to the left in FIG. 5, and luminous flux 135D illuminated from pixel D passes through the pinhole and is emitted diagonally upward to the right in FIG. 5. In such a manner, since the direction of the emitted luminous flux is determined by a positional relationship between the pixels and the pinholes, the direction of the emitted luminous flux can be controlled by turning on the pixel at a predetermined position. Although arrangement of pixels 131 of display 13 is shown in one dimension in FIG. 5, pixels 131 are similarly arranged in the direction perpendicular to the page of the drawing, and pixels 131 are two-dimensionally arranged. Therefore, light field display 15 using display 13 and pinhole film 12 is able to perform irradiation by controlling the emission direction of the luminous flux in any direction from the surface of pinhole film 12 in all directions of the hemisphere.

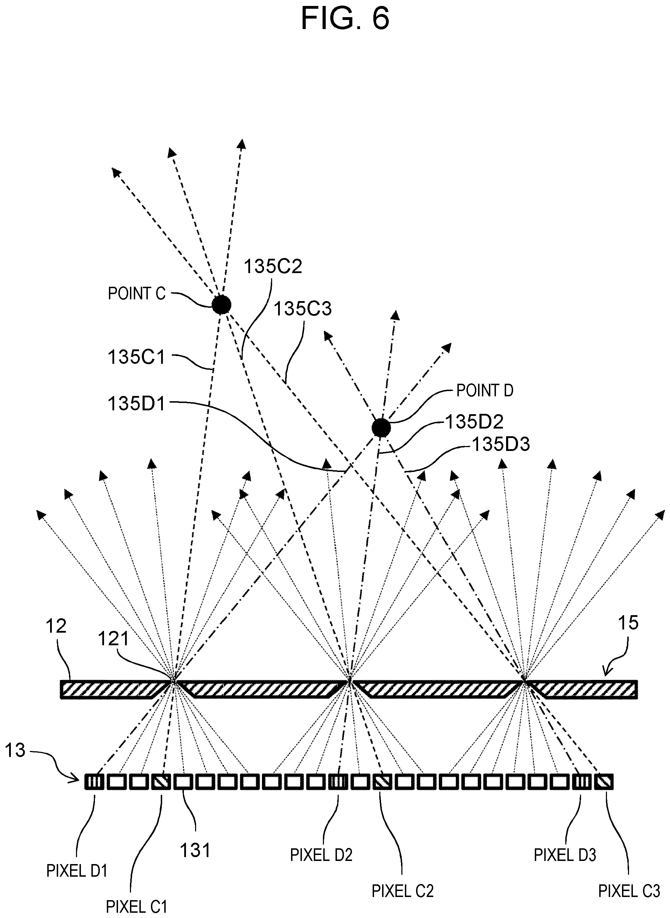

FIG. 6 is a diagram showing an example of reproduction of a stereoscopic image performed by the display device of the first exemplary embodiment. FIG. 6 describes the reproduction of the stereoscopic image by turning on the pixels at a plurality of positions.

By turning on a plurality of pixels at predetermined positions on display devices 10 and 20, an image is reproduced at an intersection of a plurality of emitted luminous fluxes. In FIG. 6, luminous fluxes 135C1, 135C2, and 135C3 illuminated through the pinhole in a predetermined direction from the plurality of pixels C1, C2, and C3, respectively, intersect at intersection C, and an image of the light emitted from intersection C is formed. Further, luminous fluxes 135D1, 135D2, and 135D3 illuminated through the pinhole in a predetermined direction from the plurality of pixels D1, D2, D3, respectively, intersect at intersection D, and an image of the light emitted from intersection D is formed. In such a manner, by turning on a plurality of pixels at predetermined positions and turning off the other pixels, it is possible to reproduce a stereoscopic image having a depth depending on the pixel positions to be turned on. Since pixels 131 are two-dimensionally arranged as in the example of FIG. 5, light field display 15 using display 13 and pinhole film 12 is able to reproduce a stereoscopic video at an optional position in all directions of the hemisphere from the surface of pinhole film 12.

For example, it is assumed that light field display 15 reproduces a stereoscopic image of a certain object. A luminous flux emitted from an object to be reproduced (specifically, a vector wave transmitted through the object or a vector wave reflected by the object) is detected by a sensor such as a camera and stored as image data. Then, the stored luminous flux is traced in the direction opposite to that of the sensor, and the luminance distribution and the wavelength distribution in a case where the luminous flux is incident on the display surface through pinhole array 122 in the direction from the object toward display 13 are calculated. The turning on/off of each pixel in display 13 is determined on the basis of the luminance distribution and the wavelength distribution, and the display data of the original image for reproducing the display image is generated and stored. In a case of reproducing the display image, a driving signal is supplied from display driving circuit 60 on the basis of the display data of the original image, and the pixels at the predetermined positions of display 13 are turned on. Thereby, the luminous flux emitted from display 13 through pinhole array 122 in a predetermined direction is reproduced and is viewed by an observer as a stereoscopic image of the target object.

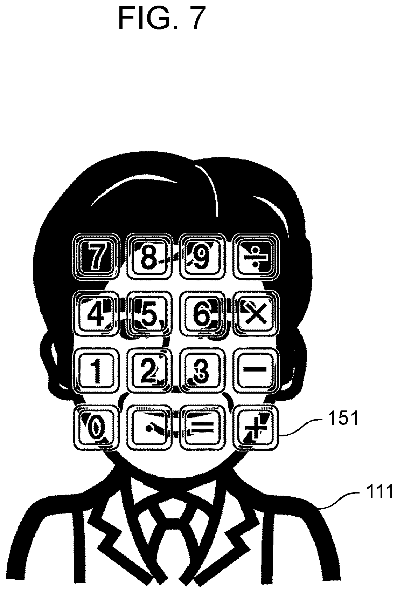

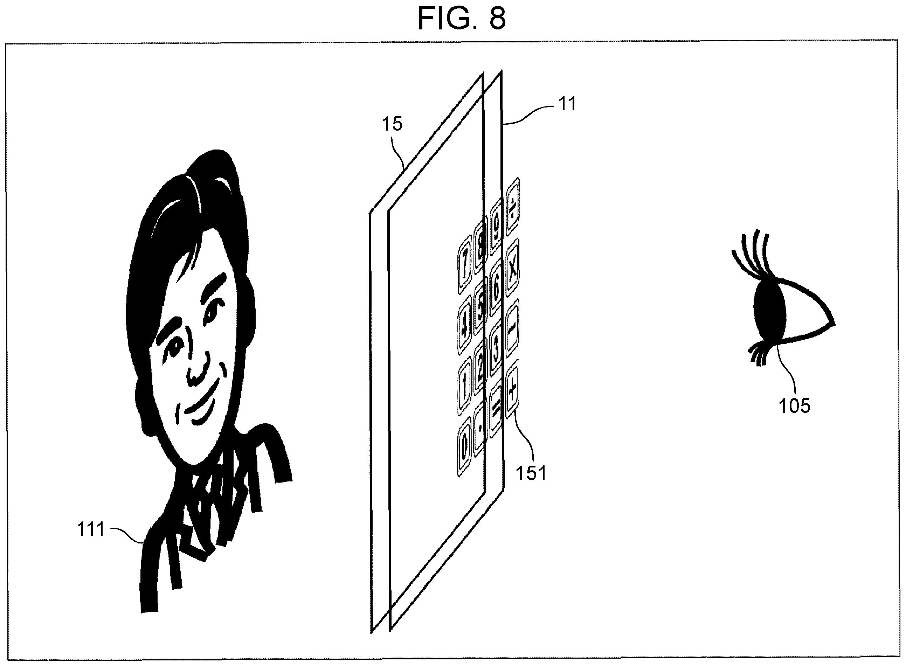

FIG. 7 is a front view showing an image display example using the display device of the first exemplary embodiment. FIG. 8 is a perspective view showing an image display example using the display device of the first exemplary embodiment. FIGS. 7 and 8 show an example in which the mirror image formed by half mirror 11 and the display image of light field display 15 are superimposed and reproduced.

In a case where a user as an observer is positioned in front of the half mirrors 11 of display devices 10 and 20, mirror image 111 of the user is reflected and displayed on half mirror 11 and is visually recognized by the user. Further, in display devices 10 and 20, a predetermined pixel of display 13 is turned on, and display image 151 is reproduced and displayed by light field display 15 using display 13 and pinhole film 12. In the example shown in the drawing, a display example in which an image of the keyboard of the numeric keypad is reproduced is shown as display image 151. In the present exemplary embodiment, mirror image 111 of the half mirror and display image 151 of the light field display are superimposed and displayed. At this time, as viewed from observer's viewpoint 105, the two videos are reproduced in a superposed state such that mirror image 111 is located closer to the rear side than a surface where half mirror 11 and light field display 15 are present and display image 151 is located closer to the front side than the surface of half mirror 11.

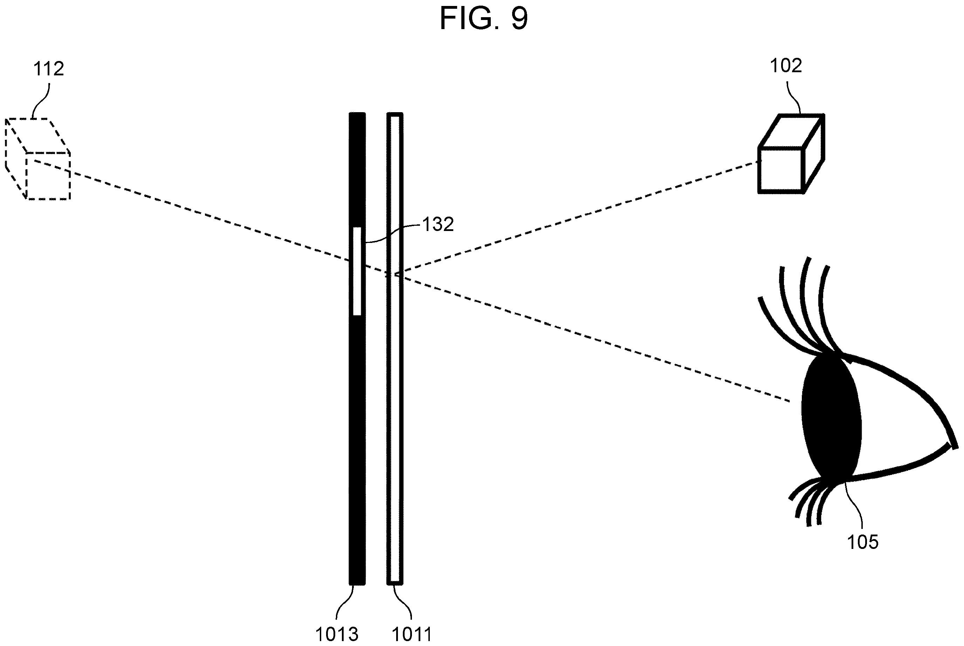

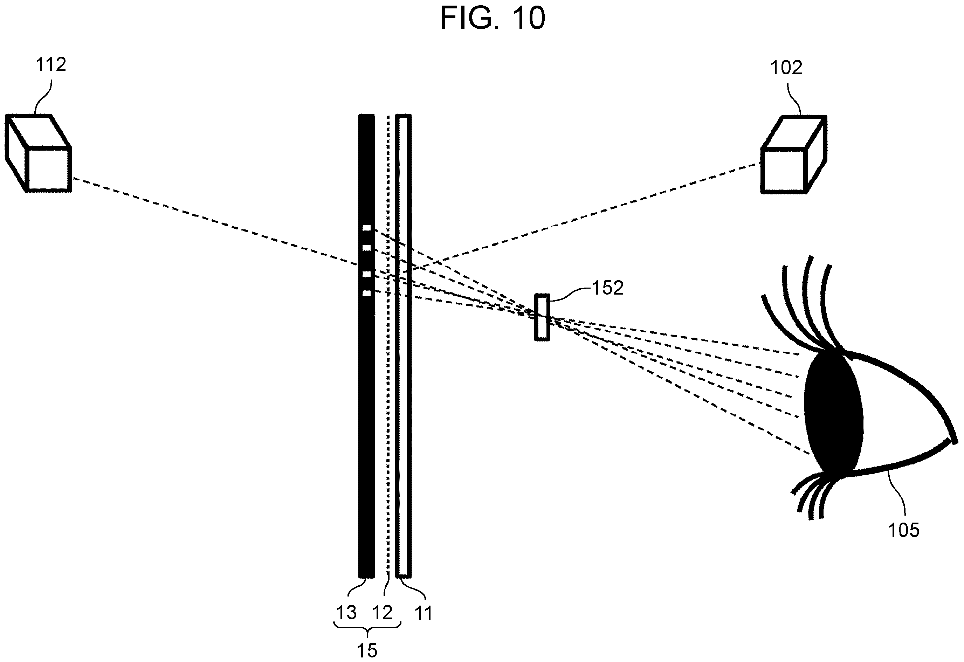

FIG. 9 is a diagram schematically showing a positional relationship between the mirror image and the display image in the conventional example. FIG. 10 is a diagram schematically showing the positional relationship between the mirror image and the display image in the display device of the first exemplary embodiment. Here, the operation of the present exemplary embodiment will be described as compared with the operation of the conventional example.

In the case of the conventional example in which display 1013 is disposed on the rear surface of half mirror 1011 as in the conventional example shown in FIG. 9, display image 132 is displayed on the display surface of half mirror 1011 on the rear side by turning on display 1013. In FIG. 9, a white portion of display 1013 indicates turned-on pixels, and a black portion thereof indicates turned-off pixels (non-turned-on pixels). Further, the image of subject 102 is reflected by half mirror 1011 and the mirror image is projected. As viewed from observer's viewpoint 105, display image 132 is visually recognized as being located behind half mirror 1011. In such a case, in a case where the luminance of display image 132 that is displayed to be turned on is high, mirror image 112 at the position corresponding to the line of sight of display image 132 is hidden by display image 132, and the observer is unable to view mirror image 112.

On the other hand, in the present exemplary embodiment shown in FIG. 10, by turning on a predetermined pixel of display 13, display image 152 formed by light field display 15 is reproduced in a space in front of the surface of half mirror 11. In FIG. 10, a white portion of display 13 indicates turned-on pixels, and a black portion indicates turned-off pixels (non-turned-on pixels). Further, the image of subject 102 is reflected by half mirror 11, and mirror image 112 is projected. As viewed from observer's viewpoint 105, display image 152 is visually recognized as being located in front of half mirror 11. In such a case, for the observer, display image 152, which is formed through a plurality of different pinholes of pinhole film 12, and mirror image 112, which is reflected by half mirror 11 on black light absorption layer 17 occupying most of the area other than the pinhole portion, are viewed in a superimposed state.

In the present exemplary embodiment, a mirror display using a half mirror and a light field display using a display and a pinhole film are superimposed and disposed so as to form a display device. Thereby, the mirror image formed by the half mirror and the display image such as the stereoscopic image formed by the light field display can be superimposed and projected, and both images can be reproduced so as to be clearly visible to the observer. By providing a black light absorption layer that absorbs external light on the pinhole film, diffused reflection of external light on the transmission side of the half mirror can be suppressed, and the mirror image can be clearly reflected with high contrast onto the black surface. Therefore, it is possible for the observer to visually recognize the mirror image more clearly.

### (Second Embodiment)

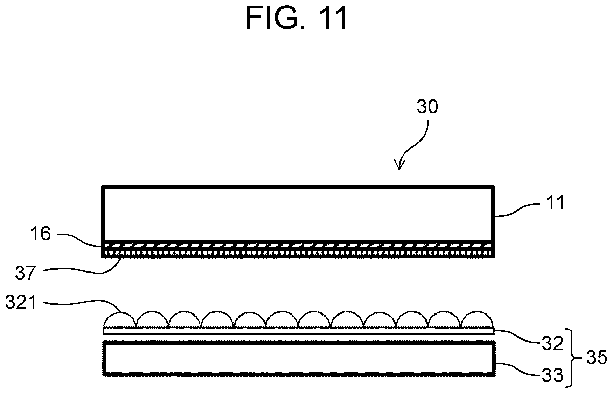

FIG. 11 is a diagram schematically showing a configuration of the display unit of the display device according to a first configuration example of a second exemplary embodiment. FIG. 11 schematically shows a cross section of display device 30 in the thickness direction (emitted light direction). The second exemplary embodiment is an example in which a microlens array is provided as an optical element array in the light field display instead of the pinhole film of the first exemplary embodiment. Here, the components different from the components of the first exemplary embodiment will be mainly described, and repeated description will not be given.

Display device 30 is configured to have half mirror 11, microlens array 32, and display 33 in order from an outer surface side (a side from which light is emitted). Diffused reflection suppression layer 37 is provided on display 33 side (lower surface of FIG. 11) with respect to reflective film 16 of half mirror 11 as an external light reflection suppression layer that suppresses reflection of external light.

In microlens array 32 as an example of the optical element array, microlens 321 is disposed and formed as a plurality of optical elements at predetermined intervals in two dimensions in the vertical and horizontal directions. Microlens array 32 is provided with one microlens 321 corresponding to a plurality of pixels for each predetermined unit of pixels of display 33. The pixels of display 33 are provided in a focal position of each microlens 321 or in the vicinity thereof. Light field display 35 is constituted of display 33 and microlens array 32.

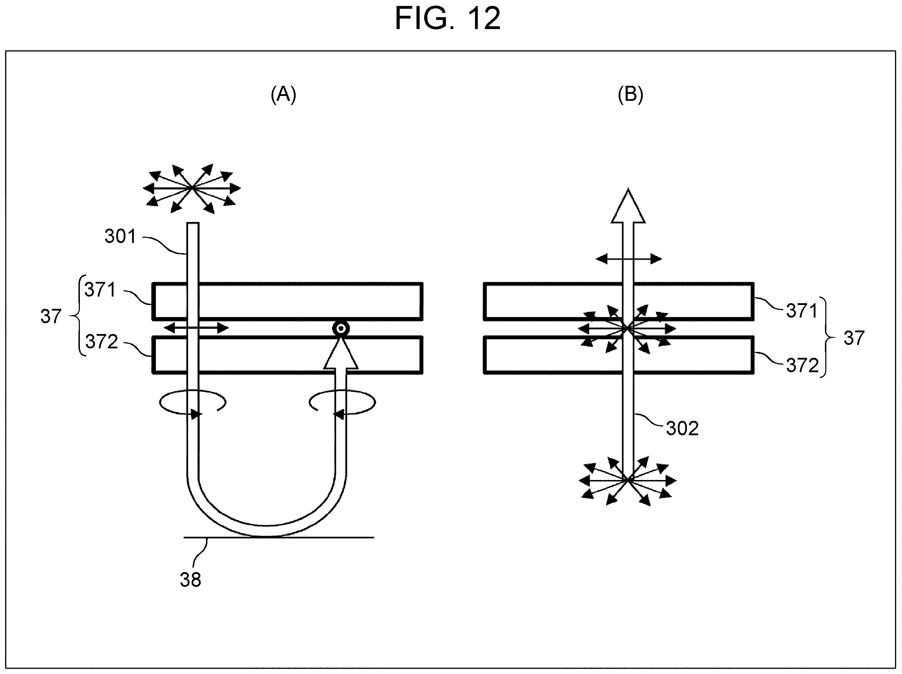

FIG. 12 is a diagram showing a configuration and an operation of diffused reflection suppression layer 37 in the first configuration example of the second exemplary embodiment. Diffused reflection suppression layer 37 is configured by laminating, for example, polarization plate 371 and quarter wave plate 372 having a slow axis at an angle of 45° with the absorption axis of polarization plate 371, and blocks the reflected light component of the external light transmitted through half mirror 11. Diffused reflection suppression layer 37 is constituted of, for example, a dielectric multilayer film.

As shown in (B) of FIG. 12, in light field display 35 provided with diffused reflection suppression layer 37, external light 301 transmits only the linearly polarized light that forms 90° with the absorption axis through polarization plate 371. The transmitted linearly polarized light becomes circularly polarized light in a case where the light passes through quarter wave plate 372 provided with a slow axis at an angle of 45° with the absorption axis of polarization plate 371. In a case where the circularly polarized light is reflected on the surface of microlens array 32 or reflection interface 38 on the surface of display 33 located closer to display 33 side than diffused reflection suppression layer 37, the orientation of the circularly polarized light is reversed. Then, in a case where the reversed circularly polarized light passes through quarter wave plate 372 again, the light is parallel to the absorption axis of polarization plate 371 and is not transmitted through polarization plate 371. Therefore, the reflection of external light 301 can be suppressed.

On the other hand, as shown in (B) of FIG. 12, emitted light 302 from the pixels of display 33 passes through quarter wave plate 372 and linearly polarized light that forms 90° with the absorption axis of polarization plate 371 is transmitted and emitted to the outside.

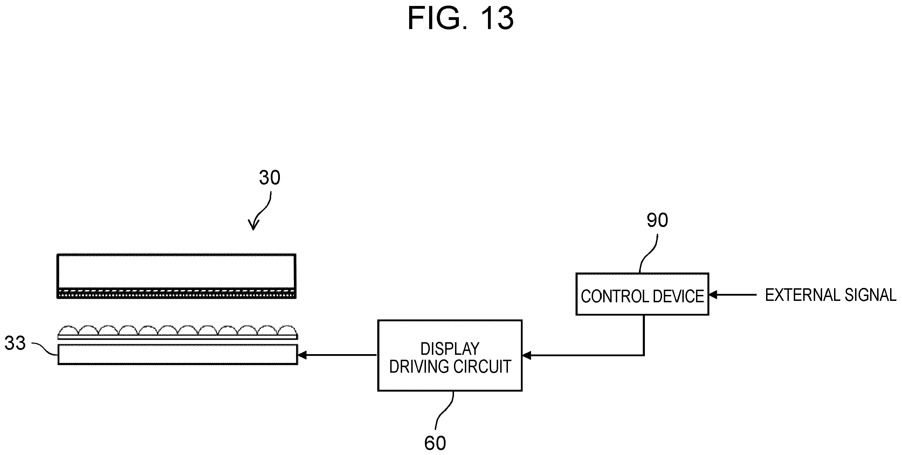

FIG. 13 is a block diagram showing a configuration of a driving unit of the display device according to the first configuration example of the second exemplary embodiment.

Display driving circuit 60 is connected to display 33 of display device 30, and display driving circuit 60 is connected to control device 90. Control device 90 performs driving control of display driving circuit 60 on the basis of an external signal sent from the outside or a display control signal which is output by control device 90 itself. Display driving circuit 60 supplies a driving signal to display 33 on the basis of the display control signal sent from control device 90. Display 33 controls a display mode of the display, such as display/non-display of an image, turning on/off of each pixel, and turning-on mode, by a driving signal sent from display driving circuit 60.

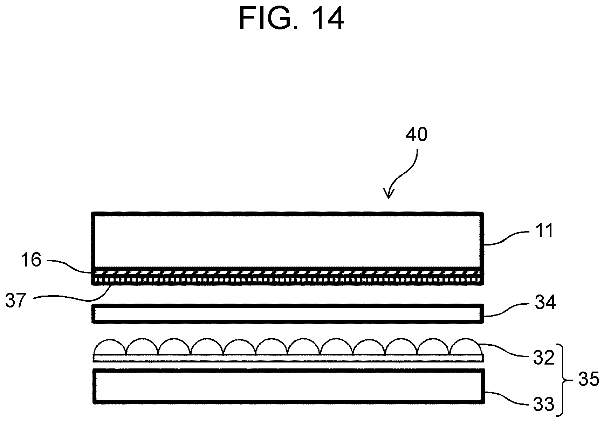

FIG. 14 is a diagram schematically showing a configuration of the display unit of the display device according to a second configuration example of the second exemplary embodiment. FIG. 14 schematically shows a cross section of display device 40 in the thickness direction (emitted light direction). The second configuration example is an example in which touch panel 34 is added to the first configuration example. Here, the components different from the first configuration example will be mainly described, and repeated description will not be given.

Display device 40 is configured to have half mirror 11, touch panel 34, microlens array 32, and display 33 in order from an outer surface side (a side from which light is emitted). Touch panel 34 may use, for example, a capacitance type touch panel device, and either a contact type (touch operation type) or a non-contact type (hover operation type) touch panel device. Touch panel 34 detects the operation position of the touch operation on the outer surface of half mirror 11 or the hover operation in a predetermined space closer to an observer side than the outer surface.

Diffused reflection suppression layer 37 may be provided on a surface of touch panel 34 on display 33 side.

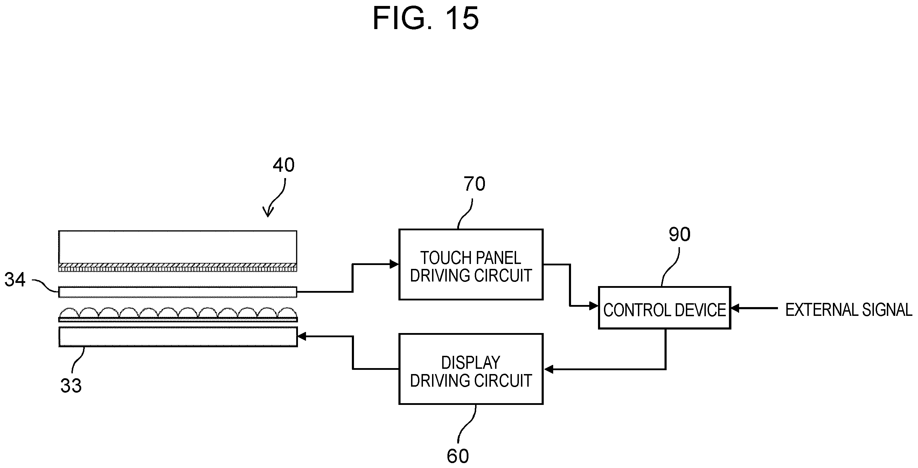

FIG. 15 is a block diagram showing a configuration of a driving unit of the display device according to the second configuration example of the second exemplary embodiment.

Display driving circuit 60 is connected to display 33 of display device 40, touch panel driving circuit 70 is connected to touch panel 34, and touch panel driving circuit 70 and display driving circuit 60 are connected to control device 90. Control device 90 performs driving control of display driving circuit 60, on the basis of an operation signal sent from touch panel driving circuit 70, an external signal sent from the outside, or a display control signal which is output by control device 90 itself. Display driving circuit 60 supplies a driving signal to display 33 on the basis of the display control signal sent from control device 90. On the basis of the operation input of touch panel 34 by a user such as an observer, display 33 controls display modes of the display, such as display/non-display of an image, turning on/off of each pixel, and a turning-on mode in accordance with a driving signal sent from display driving circuit 60.

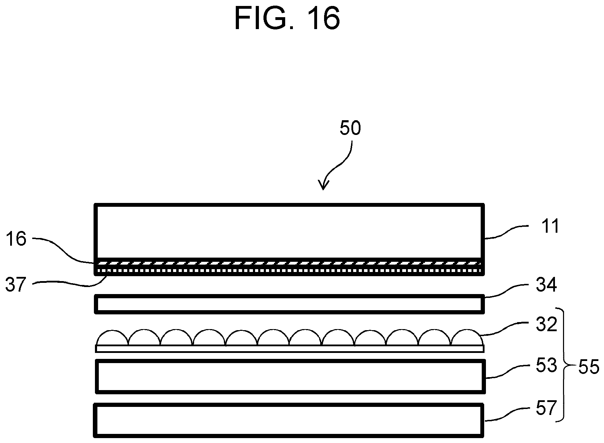

FIG. 16 is a diagram schematically showing a configuration of a display unit of a display device according to a third configuration example of the second exemplary embodiment. FIG. 16 schematically shows a cross section of display device 50 in the thickness direction (emitted light direction). The third configuration example is an example in which liquid crystal display panel 53 and backlight 57 are provided instead of display 33 of the second configuration example as a display device in the light field display. Here, the components different from the components of the second configuration example will be mainly described, and repeated description will not be given.

Display device 50 is configured to have half mirror 11, touch panel 34, microlens array 32, liquid crystal display panel 53, and backlight 57 in order from an outer surface side (a side from which light is emitted). Liquid crystal display panel 53 and backlight 57 form a liquid crystal display (LCD), which is an example of a display device. The liquid crystal display displays an image by changing the polarization state of the liquid crystal of each pixel on liquid crystal display panel 53 and transmitting a predetermined polarized light of the emitted light of backlight 57 for each pixel. Liquid crystal display panel 53, backlight 57, and microlens array 32 constitute light field display 55.

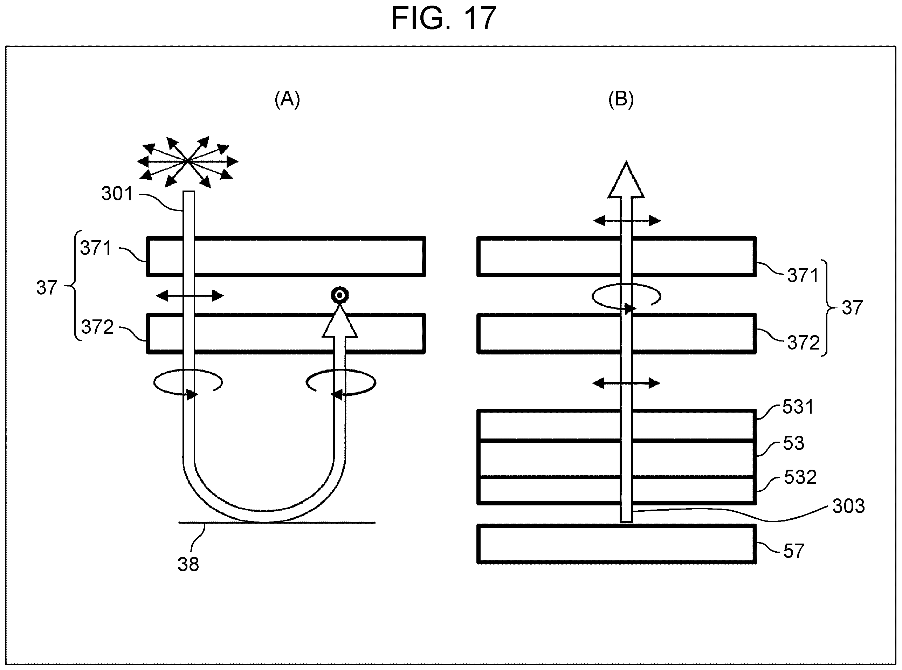

FIG. 17 is a diagram showing a configuration and an operation of diffused reflection suppression layer 37 as the external light reflection suppression layer in the third configuration example of the second exemplary embodiment. Diffused reflection suppression layer 37 is constituted of, for example, a laminate of polarization plate 371 and quarter wave plate 372 having a slow axis at an angle of 45° with the absorption axis of polarization plate 371. Further, liquid crystal display panel 53 has upper polarization plate 531 and lower polarization plate 532 on both surfaces, respectively. Quarter wave plate 372 is provided with a slow axis at an angle of 45° with the absorption axis of upper polarization plate 531 of liquid crystal display panel 53.

As shown in (A) of FIG. 17, in light field display 55 using this liquid crystal display, external light 301 transmits only the linearly polarized light forming 90° with the absorption axis through polarization plate 371, passes through quarter wave plate 372 provided with a slow axis at an angle of 45° with the absorption axis of polarization plate 371, and becomes circularly polarized light. In a case where the circularly polarized light is reflected at reflection interface 38 on the surface of microlens array 32 or the surface of liquid crystal display panel 53, the orientation of the circularly polarized light is reversed. Then, in a case where the reversed circularly polarized light passes through quarter wave plate 372 again, the light is parallel to the absorption axis of polarization plate 371 and is not transmitted through polarization plate 371. Therefore, the reflection of external light 301 can be suppressed.

On the other hand, as shown in (B) of FIG. 17, emitted light 303 from backlight 57 of the liquid crystal display passes through lower polarization plate 532, liquid crystal display panel 53, and upper polarization plate 531. At this time, the light of each pixel, which passes through upper polarization plate 531 and becomes linearly polarized light, passes through quarter wave plate 372 and becomes circularly polarized light, and the linearly polarized light, which forms 90° with the absorption axis of polarization plate 371 in the circularly polarized light, is transmitted and emitted to the outside.

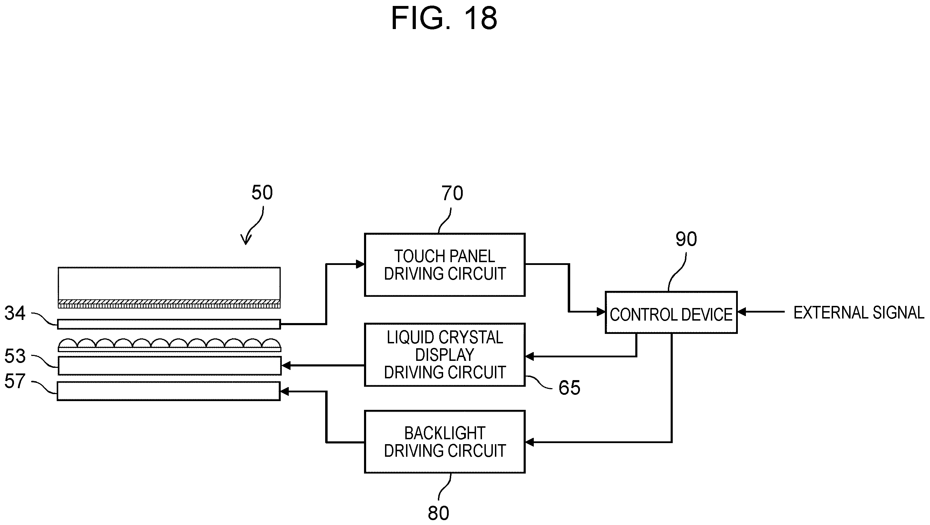

FIG. 18 is a block diagram showing a configuration of a driving unit of the display device according to the third configuration example of the second exemplary embodiment.

Liquid crystal display driving circuit 65 is connected to liquid crystal display panel 53 of display device 50 as an example of a driving unit, backlight driving circuit 80 is connected to backlight 57, and touch panel driving circuit 70 is connected to touch panel 34. Further, touch panel driving circuit 70, liquid crystal display driving circuit 65, and backlight driving circuit 80 are connected to control device 90. Control device 90 performs driving control of liquid crystal display driving circuit 65 and backlight driving circuit 80, on the basis of the operation signal sent from touch panel driving circuit 70, the external signal sent from the outside, or the display control signal which is output by control device 90 itself. Liquid crystal display driving circuit 65 supplies a driving signal to liquid crystal display panel 53, on the basis of the display control signal sent from control device 90. Backlight driving circuit 80 supplies a driving signal to backlight 57, on the basis of the display control signal sent from control device 90.

In liquid crystal display panel 53, a display mode of the liquid crystal display such as display/non-display of an image, a light transmission state in each pixel, or a display mode of an image is controlled in accordance with a driving signal sent from display driving circuit 60, on the basis of an operation input of touch panel 34 performed by the user. The turning on/off of backlight 57 is controlled by a driving signal sent from backlight driving circuit 80. In a case of erasing the image on the liquid crystal display and switching to only the mirror of half mirror 11, liquid crystal display driving circuit 65 and backlight driving circuit 80 shut off liquid crystal display panel 53 and turn off backlight 57. Alternatively, backlight driving circuit 80 only turns off backlight 57.

Next, an operation of light field display 35 in display devices 30 and 40 of the second exemplary embodiment, that is, the display of an image such as a stereoscopic image formed by the light field display will be described. Since the same applies to light field display 55 in display device 50 using the liquid crystal display, the repeated description thereof will not be given.

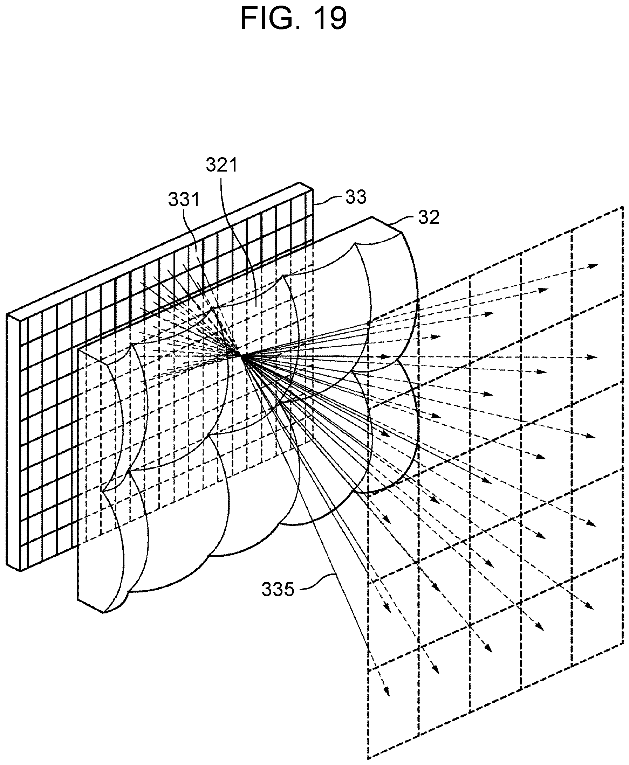

FIG. 19 is a perspective view showing a relationship between each pixel of the display and the microlens in the display device of the second exemplary embodiment. A predetermined unit of the plurality of pixels 331 of display 33 and one microlens 321 of microlens array 32 are provided to correspond to each other. FIG. 19 shows luminous flux 335 which is emitted from each pixel 331 of display 33 and passes through microlens 321. Luminous flux 335 in a direction, in which luminous flux 335 passes through the center of microlens 321 from the position of pixel 331 that emits light, is shown. The emission direction of luminous flux 335 passing through microlens 321 is determined in accordance with the position of pixel 331 that emits light. The emitted light from display 33 passes through microlens array 32 and becomes a luminous flux directed in a predetermined direction, depending on the positional relationship between the pixels and the microlenses, and is emitted.

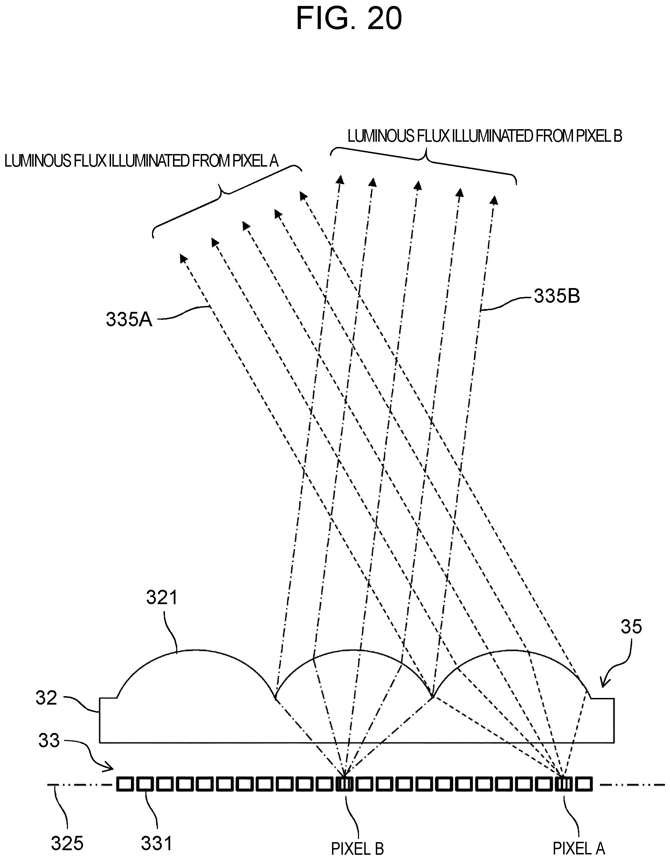

FIG. 20 is a diagram showing an example of an emitted luminous flux in the display device of the second exemplary embodiment. In FIG. 20, the direction of the emitted luminous flux due to the turning on of the pixel at a predetermined position will be described.

In display devices 30 and 40, the plurality of pixels 331 of display 33 and microlenses 321 of microlens array 32 are disposed at a predetermined distance away from each other. Pixels 331 of display 33 are disposed in a range of focal position 325 of microlens 321 or in the vicinity thereof. In a case where pixel 331 is disposed at focal position 325 of microlens 321 and optional pixel 131 is turned on, the light becomes a luminous flux of parallel light that passes through microlens 321 and goes in a direction corresponding to the pixel position with respect to the microlens. In a case where pixels 331 are disposed to be slightly shifted back and forth from focal position 325, the luminous flux is slightly diffused or converged as compared with the parallel light. Then, the luminous flux is emitted as a luminous flux toward half mirror 11 side in a predetermined direction, and illuminates the space on the observer side.

At this time, in FIG. 20, luminous flux 335A illuminated from the pixel A passes through the microlens and is emitted in the diagonally upward direction to the left in FIG. 20, and luminous flux 335B illuminated from pixel B passes through the microlens and is emitted diagonally upward to the right of FIG. 20. In such a manner, since the direction of the emitted luminous flux is determined by the positional relationship between the pixel and the microlens, the direction of the emitted luminous flux can be controlled by turning on the pixel at a predetermined position. Although the arrangement of pixels 331 of display 33 is shown in one dimension in FIG. 20, pixels 331 are similarly arranged in the direction perpendicular to the page of the drawing, and pixels 331 are two-dimensionally arranged. Therefore, light field display 35 using display 33 and microlens array 32 is able to perform irradiation by controlling the emission direction of the luminous flux in any direction from the surface of microlens array 32 in all directions of the hemisphere.

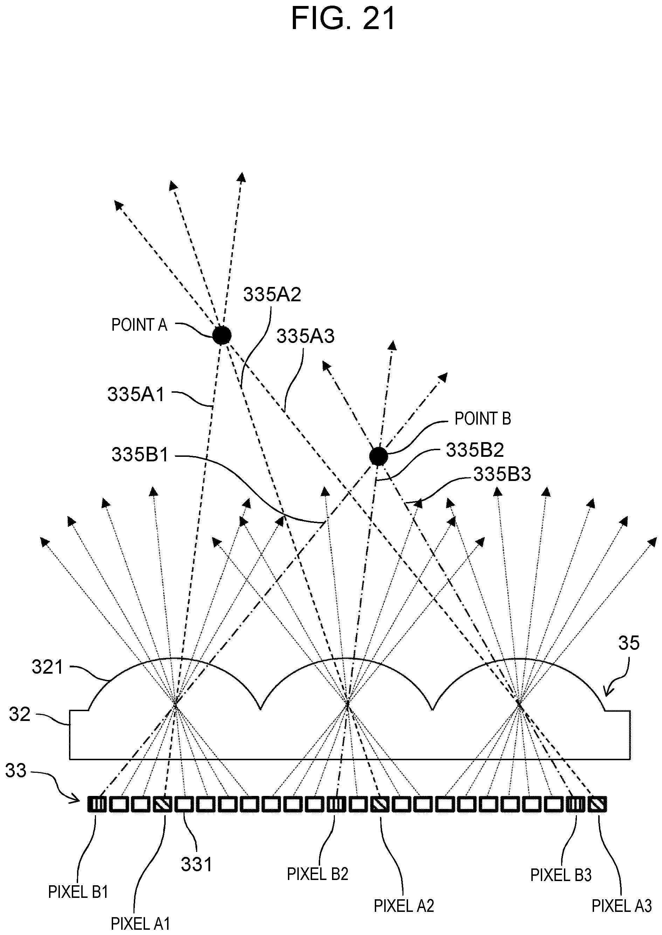

FIG. 21 is a diagram showing an example of reproduction of a stereoscopic image performed by the display device of the second exemplary embodiment. FIG. 21 describes the reproduction of the stereoscopic image by turning on the pixels at a plurality of positions.

By turning on a plurality of pixels at predetermined positions on display devices 30 and 40, an image is reproduced at an intersection of a plurality of emitted luminous fluxes. In FIG. 21, luminous fluxes 335A1, 335A2, and 335A3 illuminated in a predetermined direction from the plurality of pixels A1, A2, and A3 respectively through microlens 321 intersect at intersection A, and an image of the light emitted from intersection A is formed. Further, luminous fluxes 335B1, 335B2, and 335B3 illuminated through microlenses in a predetermined direction from the plurality of pixels B1, B2, and B3, respectively, intersect at intersection B, and an image of the light emitted from intersection B is formed. In such a manner, by turning on a plurality of pixels at predetermined positions and turning off the other pixels, it is possible to reproduce a stereoscopic image having a depth depending on the pixel positions to be turned on.
Since pixels 331 are two-dimensionally arranged as in the example of FIG. 20, light field display 35 using display 33 and microlens array 32 is able to reproduce a stereoscopic video at an optional position in all directions of the hemisphere from the surface of microlens array 32.

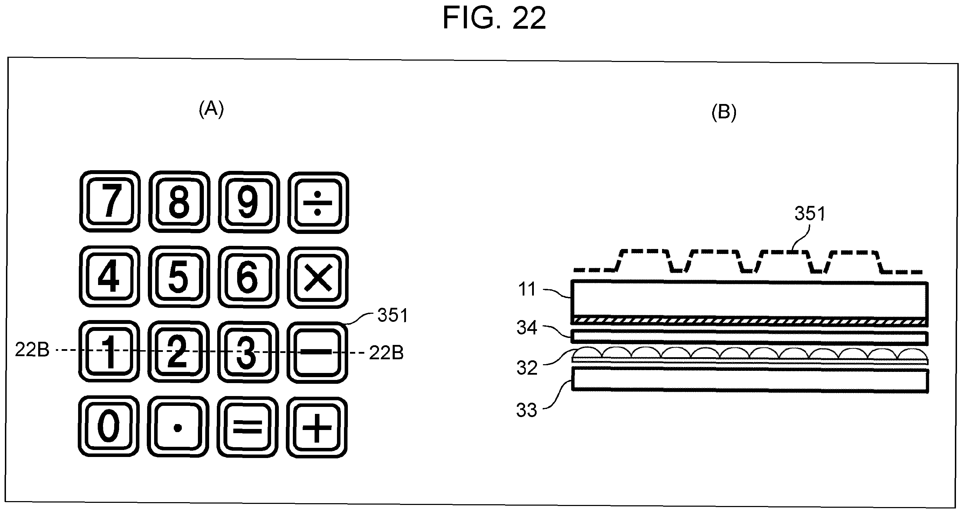

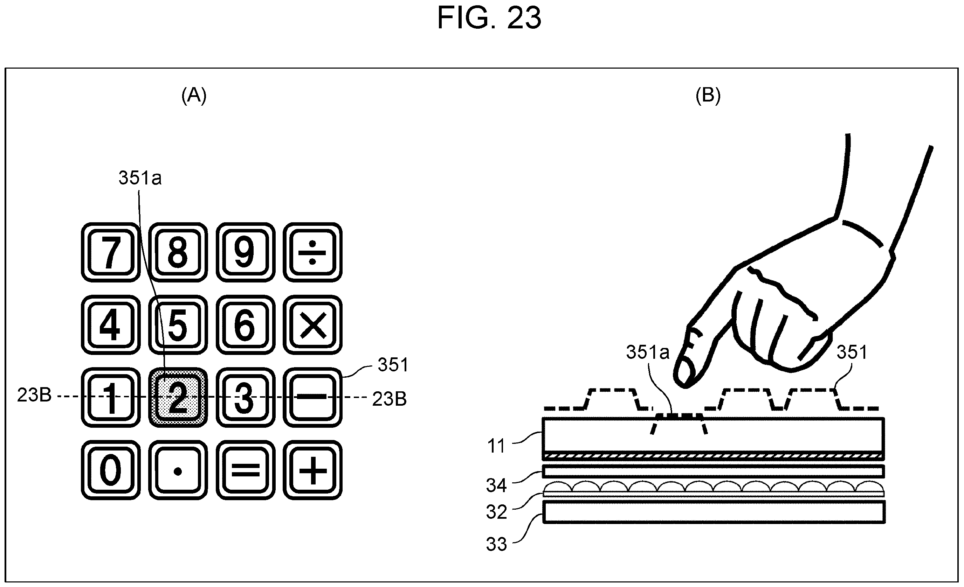

FIGS. 22 and 23 are diagrams showing an image display example using the display device of the second exemplary embodiment. FIG. 22 shows an example of the display device and the display image thereof, where (A) of FIG. 22 is a plan view showing a display image and (B) of FIG. 22 is a view schematically showing a cross section of 22B-22B in (A) of FIG. 22, that is, a cross section of the display device in the thickness direction (the emitted light direction). FIG. 23 shows an example of the display image in a case where the user operates the touch panel from the state of FIG. 22, where (A) of FIG. 23 is a plan view showing the display image and (B) of FIG. 23 is a view showing a cross section of 23B-23B of (A) of FIG. 23.

In display device 40, a predetermined pixel of display 33 is turned on, and display image 351 is reproduced and displayed by light field display 35 using display 33 and microlens array 32. In (A) of FIG. 22, a display example in which an image of the keyboard of the numeric keypad is reproduced is shown as display image 351. Further, as shown in (B) of FIG. 22, display image 351 is reproduced to be viewed as an image in a state of protruding (floating) into a space on the front side (observer side) of the surface of half mirror 11 as viewed from an observer.

As shown in (A) and (B) of FIG. 23, in a case where a user as the observer touches any key 351a of the numeric keypad reproduced as display image 351 with a user's finger, the touch operation is detected by touch panel 34, and the operation signal is input to control device 90. At this time, a display control signal is sent from control device 90 to display driving circuit 60 to control the turning on of the pixels of display 33, and the display mode of display image 351 changes. As a specific example, as shown in (B) of FIG. 23, touched key 351a is pressed and is reproduced in a state where the position thereof changes in the depth direction so as to be retracted to the rear side. At this time, the disparity between the display image and the position of the touch operation performed by the observer can be eliminated by reproducing the display image such as the numeric keypad such that the display image is visually recognized from the viewpoint of the observer at the position of the outer surface of half mirror 11 or in the space closer to an observer side than the outer surface.

In the present exemplary embodiment, a mirror display using a half mirror and a light field display using a display and a microlens array are superimposed and disposed so as to form a display device. Thereby, the mirror image formed by the half mirror and the display image such as the stereoscopic image formed by the light field display can be superimposed and projected, and both images can be reproduced so as to be clearly visible to the observer. Further, in a case where the display device is provided with a touch panel, the display image of the operation unit (operation key, and the like) for touch operation can be formed on the outer surface of the half mirror or at a position in front of the outer surface by the light field display. Therefore, it is possible to match the operation position of the touch panel with the position of the display image of the operation unit. Therefore, the disparity between the touch operation position and the display image can be eliminated, and the operability can be improved.

As described above, the display device of the present exemplary embodiment includes a mirror display element such as half mirror 11 that reflects a part of the external light and transmits a part of the external light. Further, the display device includes: display 13 which is disposed on the side opposite to the outer surface of the mirror display element and in which a plurality of pixels are two-dimensionally arranged; and an optical element array which is disposed in parallel with the light emission surface of display 13 between the mirror display element and display 13 and in which a plurality of optical elements such as pinholes 121 are arranged corresponding to a predetermined unit of pixels. Light field display 15 is constituted of the display and the optical element array. Further, the display device is disposed between the mirror display element and display 13, and includes an external light reflection suppression layer such as black light absorption layer 17 that suppresses the reflection of external light. Further, the display device includes a driving unit that drives display 13 to turn on a predetermined pixel. The driving unit has, for example, display driving circuit 60 that drives display 13 and control device 90 that controls driving of display driving circuit 60. In the above-mentioned configuration, the reflection of external light in the display device is suppressed by the external light reflection suppression layer, and the mirror image projected by the mirror display element and the display image by the light field display are reproduced without being affected by each other. Thereby, the mirror image of the half mirror and the image of the light field display are superimposed such that both images can be reproduced to be appropriately observed by the observer.

Further, in display device 10 of the present exemplary embodiment, the optical element array is constituted of pinhole array 122 in which a plurality of pinholes 121 are two-dimensionally arranged at predetermined intervals. By providing pinhole array 122, the orientation of the luminous flux emitted through pinhole array 122 can be controlled in accordance with the position of the pixel turned on by display 13, and the luminous flux emitted in the predetermined direction can be reproduced. In a case where the light field display is constituted of a pinhole array, the luminous flux emitted from the light field display is emitted only from a minute point of the pinhole. Therefore, the mirror image formed by the half mirror is suppressed from being affected by the display image of the light field display, and the observer is able to observe a clear mirror image.

Further, in display device 30 of the present exemplary embodiment, the optical element array is constituted of microlens array 32 in which a plurality of microlenses 321 are two-dimensionally arranged at predetermined intervals. By providing microlens array 32, the orientation of the luminous flux focused and emitted through microlens array 32 can be controlled in accordance with the position of the pixel turned on by display 13, and the luminous flux emitted in a predetermined direction can be reproduced. In a case where the light field display is constituted of the microlens array, the luminous flux emitted from the light field display can be adjusted by the disposition with respect to the focal length of the microlens, such as a parallel luminous flux, a slightly converging luminous flux, and a slightly diffused luminous flux. Therefore, the emitted luminous flux of the light field display can be controlled, and a desired display target object can be reproduced.

Further, display devices 20 and 40 of the present exemplary embodiment each are disposed between the mirror display element and displays 13 and 33, and include touch panels 14 and 34 each of which is for detecting the operation position of the touch operation performed by the observer or the hover operation in a predetermined space. By providing touch panels 14 and 34 in the display device, a display image for operating the touch panel can be reproduced by the light field display. In such a case, an image for touch panel operation can be reproduced by combining a mirror image formed by a half mirror and a display image such as a stereoscopic image formed by a light field display, and a touch panel and a display with favorable operability can be realized.

Further, in the display device of the present exemplary embodiment, the external light reflection suppression layer is disposed on the surface of pinhole array 122 on the mirror display element side, and is constituted of black light absorption layer 17 that absorbs the external light transmitted through the mirror display element. By providing a black light absorption layer that absorbs external light in the pinhole array, diffused reflection of external light on the transmission side of the half mirror can be suppressed, and the mirror image can be reflected onto the black surface as the background. Therefore, it is possible for the observer to visually recognize the mirror image more clearly.

Further, in the display device of the present exemplary embodiment, the external light reflection suppression layer is disposed on the surface of the mirror display element on microlens array 32 side, and is constituted of diffused reflection suppression layer 37 that blocks the component of the reflected light of the external light transmitted through the mirror display element. Diffused reflection suppression layer 37 is configured by using, for example, a polarization plate, a quarter wave plate, or the like so as to reflect external light by a display, a microlens array, or the like after the light is transmitted through the mirror display element and block components of the reflected light which returns to the mirror display element. In a case where the touch panel is provided, the external light reflection suppression layer may be disposed on the surface of the touch panel on the display side. Thereby, diffused reflection of external light on the transmission side of the half mirror can be suppressed, the influence of unnecessary reflected light on the mirror image projected on the half mirror can be suppressed, and noise such as bleeding can be reduced. Therefore, it is possible for the observer to visually recognize the mirror image more clearly.

Further, in the display device of the present exemplary embodiment, the display reproduces the display image by superimposing the display image on the mirror image through the mirror display element. Thereby, it is possible for the observer to clearly view both images. For example, an image such as an operation key for touch panel operation can be displayed on a display to express an operation screen combined with a mirror image, and a display image having favorable visibility and operability for the user can be realized.

Further, in the display device of the present exemplary embodiment, the display controls the orientation of the luminous flux emitted through the optical element array by turning on the pixel at a predetermined pixel position among the plurality of pixels, and reproduces a display target object with a display image. Thereby, the light emitted in the predetermined direction can be reproduced in the same manner as the display target object, and an image close to the real thing that imitates the target object can be formed and visually recognized by the observer.

Further, in the display device of the present exemplary embodiment, the display reproduces the display image visually recognized at the position of the outer surface of the mirror display element from the viewpoint of the observer or in the space closer to the observer side than the outer surface. Thereby, it is possible to display a display image such as a stereoscopic image on the outer surface of the mirror display element, or to reproduce an image in a state of protruding forward from the mirror display element. Therefore, it is possible to realize an image with a high sense of presence which can be appropriately observed by the observer. Further, in a case where the touch panel is provided, the operation position of the touch panel and the position of the display image of the operation unit are matched by reproducing the display image by the light field display in accordance with the position of the outer surface of the mirror display element. As a result, the disparity of the display image can be eliminated. Therefore, an image with favorable operability can be reproduced.

Further, in the display device of the present exemplary embodiment, the light field display reproduces a stereoscopic image as the display image. Thereby, an observer is able to visually recognize a stereoscopic image with a high sense of presence, and the expressive power of the display image by the display device can be improved.

Although various exemplary embodiments have been described above with reference to the drawings, it is needless to say that the present invention is not limited to such examples. It is apparent to a person skilled in the art that various modification examples or variations can be made within the scope of the claims, and it should be understood that such modifications and variations also belong to the technical scope of the present invention. Further, components in the above-mentioned exemplary embodiment may be arbitrarily combined without departing from the spirit of the invention.

### INDUSTRIAL APPLICABILITY

The present disclosure is useful for a display device that superimposes a mirror image formed by a half mirror and an image formed by a light field display such that both images can be reproduced to be appropriately observed by an observer.

### REFERENCE MARKS IN THE DRAWINGS

10, 20, 30, 40, 50: display device
11: half mirror
12: pinhole film
13, 33: display
14,34: touch panel
15, 35, 55: light field display
16: reflective film
17: black light absorption layer
32: microlens array
37: diffused reflection suppression layer
53: liquid crystal display panel
57: backlight
60: display driving circuit
65: liquid crystal display driving circuit
70: touch panel driving circuit
80: backlight driving circuit
90: control device
102: subject
105: viewpoint
111, 112: mirror image
121: pinhole
122: pinhole array
131, 331, A, A1, A2, A3, B, B1, B2, B3, C, C1, C2, C3, D, D1, D2, D3: pixel
135C, 135C1, 135C2, 135C3, 135D, 135D1, 135D2, 135D3, 335, 335A, 335A1, 335A2, 335A3, 335B, 335B1, 335B2, 335B3: luminous flux
132, 151, 152, 351: display image
301: external light
302, 303: emitted light
321: microlens
371: polarization plate
372: quarter wave plate
531: upper polarization plate
532: lower polarization plate

## Claims

1. A display device comprising:
a mirror display element that reflects a part of external light and transmits a part of the external light;
a display that is disposed on an opposite side of an outer surface of the mirror display element, in which a plurality of pixels are two-dimensionally arranged;
an optical element array that is disposed between the mirror display element and the display in parallel with a light emission surface of the display, in which a plurality of optical elements corresponding to a predetermined unit of pixels among the plurality of pixels are arranged;
an external light reflection suppression layer that is disposed between the mirror display element and the display to suppress reflection of the external light; and
a driving unit that drives the display to turn on a predetermined pixel among the plurality of pixels.

2. The display device according to Claim 1, wherein the optical element array is constituted of a pinhole array in which a plurality of pinholes are two-dimensionally arranged at predetermined intervals.

3. The display device according to Claim 1, wherein the optical element array is constituted of a microlens array in which a plurality of microlenses are two-dimensionally arranged at predetermined intervals.

4. The display device according to any one of Claims 1 to 3, further comprising a touch panel that is disposed between the mirror display element and the display to detect an operation position of a touch operation by an observer or a hover operation in a predetermined space.

5. The display device according to Claim 2, wherein the external light reflection suppression layer is disposed on a surface of the pinhole array on a mirror display element side, and is constituted of a black light absorption layer which absorbs the external light transmitted through the mirror display element.

6. The display device according to Claim 3, wherein the external light reflection suppression layer is disposed on a surface of the mirror display element on a microlens array side, and is constituted of a diffused reflection suppression layer which blocks a component of reflected light of the external light transmitted through the mirror display element.

7. The display device according to any one of Claims 1 to 6, wherein the display reproduces a display image by superimposing the display image on a mirror image of the mirror display element.

8. The display device according to any one of Claims 1 to 7, wherein the display controls an orientation of a luminous flux emitted through the optical element array by turning on a pixel at a predetermined pixel position among the plurality of pixels, and reproduces a display target object by using a display image.

9. The display device according to any one of Claims 1 to 8, wherein the display reproduces a display image visually recognized at a position of the outer surface of the mirror display element or in a space closer to an observer side than the outer surface from a viewpoint of the observer.

10. The display device according to any one of Claims 7 to 9, wherein the display reproduces a stereoscopic image as the display image.
